# EUROPÄISCHE PATENTANMELDUNG

(11) **EP 4 678 356 A1**
(43) Veröffentlichungstag der Anmeldung: **14.01.2026**
(21) Anmeldenummer: 25218791.9
(22) Anmeldetag: 13.10.2021
(51) Int. Cl.: B25J 19/02, B25J 21/02, G06F 3/01, B23Q 17/00, B01L 1/04, A61B 5/00

(54) **ISOLATORVORRICHTUNG SOWIE VERFAHREN ZUR ÜBERWACHUNG**

(30) Priorität: 02.09.2021 DE 102021122772
(62) Teilanmeldung aus: 21202453.3
(71) Anmelder: OPTIMA pharma containment GmbH, 78315 Radolfzell (DE)
(72) Erfinder: Kaßner, Thomas, 78315 Radolfzell (DE); Heuer, Christian, 6043 Adligenswil (CH)
(74) Vertreter: Patent- und Rechtsanwälte Behrmann Wagner PartG mbB

(57) **Zusammenfassung**

Isolatorvorrichtung (10), insbesondere für pharmazeutische und/oder biotechnische Anwendungen, aufweisend einen Manipulationsraum (12), zumindest einen in den Manipulationsraum (12) einsetzbaren Arbeitshandschuh (14) und Sensormittel (16) zur Erfassung eines eingesetzten Zustandes des zumindest einen Arbeitshandschuhs (14), wobei der zumindest eine Arbeitshandschuh (14) in einer Eingriffsöffnung (18) des Manipulationsraums (12) auswechselbar einsetzbar ist und im eingesetzten Zustand die Isolatorvorrichtung (10) abdichtet. Dabei sind die Sensormittel (16) beabstandet zu der Eingriffsöffnung (18) in dem Manipulationsraum (12) angeordnet und mit einer Erfassungseinheit (20) verbunden, wobei ein Erfassungsbereich (22) der Sensormittel (16) wenigstens einen Arbeitsbereich des zumindest einen Arbeitshandschuhs (14) im Bereich der Eingriffsöffnung (18), insbesondere einen Querschnitt mit Durchmesser (D) der Eingriffsöffnung (18), umfasst, um zumindest ein Auswechseln und/oder eine Bedienung des zumindest einen Arbeitshandschuhs (14) in dem Manipulationsraum (12) zu detektieren und mittels der Erfassungseinheit (20) auszuwerten.

## Beschreibung

Die vorliegende Erfindung betrifft eine Isolatorvorrichtung, insbesondere für pharmazeutische und/oder biotechnische Anwendungen, nach dem Oberbegriff des Anspruchs 1, sowie ein Verfahren zur Überwachung der Isolatorvorrichtung nach dem Anspruch 12.

Die EP 2 535 650 B1 zeigt eine Isolatorvorrichtung, insbesondere eine Dekontaminationsanordnung für pharmatechnische Anwendungen, umfassend einen zu dekontaminierenden Raum, insbesondere einen Isolatorraum, sowie eine Reinigungseinrichtung zum Entziehen von gas- und/oder dampfförmigen Dekontaminationsmitteln aus der Raumluft, insbesondere Wasserstoffperoxid. Bei dem zu dekontaminierenden Raum handelt es sich um einen biotechnischen oder pharmatechnischen Manipulationsraum, in den über fest mit dem Raum verbundene Arbeitshandschuhe eingegriffen werden kann. Dabei sind die Arbeitshandschuhe, vorzugsweise auswechselbar, an seitlichen Öffnungen des Manipulationsraums abdichtend fixiert. Bevorzugt zusätzlich weist die Isolatorvorrichtung einen Handhabungsraum für Pharmazeutika und/oder einen Abfüllraum mit einer Abfülleinrichtung auf, die innerhalb des oder angrenzend an den Manipulationsraum/s angeordnet sind.

Die EP 3 771 525 A1 offenbart ebenfalls eine Isolatorvorrichtung mit einem Manipulationsraum und in den Manipulationsraum einsetzbare Arbeitshandschuhe, insbesondere Ärmelhandschuhe, wobei die Arbeitshandschuhe eine Eingriffsvorrichtung aufweisen mittels der die Arbeitshandschuhe in einer Eingriffsöffnung des Manipulationsraums einsetzbar sind. Zur Detektion oder zur Registrierung einer eingesetzten Eingriffsvorrichtung mit Arbeitshandschuhen in die Isolatorvorrichtung, weist die Eingriffsvorrichtung Sensormittel, insbesondere RFID Tags, auf.

Alternativ zu der Anordnung der Sensormittel in der Eingriffsvorrichtung, kann ein RFID Tag auch an einem Arbeitshandschuh zur Leckageprüfung angeordnet sein.

Die Sensormittel sind also unmittelbar mit der Eingriffsvorrichtung der Arbeitshandschuhe verbunden, weshalb zur Detektion und Registrierung eine Art Spezialvorrichtung oder Spezialhandschuhe, insbesondere mit einer speziellen Kopplung zu einer Erfassungseinheit, erforderlich sind. Bei einem versehentlichen Einsatz von Arbeitshandschuhen mit einer Standardvorrichtung ohne Sensormittel kann es also zu einer nicht autorisierten Bedienung des Manipulationsraums kommen. Des Weiteren ist die Isolatorvorrichtung nurmehr mit diesen Spezialvorrichtungen bedienbar.

Außerdem sind Sensormittel, die an der Eingriffsvorrichtung oder den Arbeitshandschuhen selbst festgelegt sind, nicht dazu geeignet eine Bewegung des Arbeitshandschuhs zu erfassen. Deshalb kann zum Beispiel auch ein Eingriff in einen Sperrbereich nicht erfasst werden, in dem Gefahrgut gelagert ist und/oder automatisierte Prozesse, insbesondere zur Dekontamination, ausgeführt werden. Ein versehentlicher und nicht überwachter Eingriff in einem solchen Sperrbereich könnte zu einer Verletzung einer Bedienperson führen.

Der vorliegenden Erfindung liegt die Aufgabe zugrunde, eine Isolatorvorrichtung vorzuschlagen, die bei Vermeidung der aus dem Stand der Technik bekannten Probleme eine Überwachung und/oder einen Eingriff, insbesondere zur Verbesserung einer Bediensicherheit, unabhängig von der Wahl eines Arbeitshandschuhs oder dessen Eingriffsvorrichtung detektieren kann.

Ferner besteht die Aufgabe darin, ein Verfahren zur Überwachung der Isolatorvorrichtung anzugeben.

Diese Aufgabe wird hinsichtlich der Isolatorvorrichtung mit den Merkmalen des unabhängigen Anspruchs 1 und hinsichtlich des Verfahrens mit den Merkmalen des Anspruchs 12 gelöst.

Vorteilhafte Ausführungsformen sind Gegenstand der Unteransprüche.

Erfindungsgemäß wird eine Isolatorvorrichtung, insbesondere für pharmazeutische und/oder biotechnische Anwendungen, vorgeschlagen, die einen Manipulationsraum, zumindest einen in den Manipulationsraum einsetzbaren Arbeitshandschuh und Sensormittel zur Erfassung eines eingesetzten Zustandes des zumindest einen Arbeitshandschuhs aufweist, wobei der zumindest eine Arbeitshandschuh in einer Eingriffsöffnung des Manipulationsraums auswechselbar einsetzbar ist und im eingesetzten Zustand die Isolatorvorrichtung abdichtet. Dabei sind die Sensormittel beabstandet zu der Eingriffsöffnung in dem Manipulationsraum angeordnet und mit einer Erfassungseinheit verbunden, wobei ein Erfassungsbereich der Sensormittel, insbesondere bildgebende Sensormittel, wenigstens einen Arbeitsbereich des zumindest einen Arbeitshandschuhs im Bereich der Eingriffsöffnung, insbesondere einen Querschnitt mit Durchmesser der Eingriffsöffnung, umfasst, um zumindest ein Auswechseln und/oder eine Bedienung des zumindest einen Arbeitshandschuhs in dem Manipulationsraum zu detektieren und mittels der Erfassungseinheit auszuwerten.

Unter der Isolatorvorrichtung wird im Rahmen der Erfindung vorzugsweise eine Dekontaminationsanordnung verstanden, in der durch Einleitung von bestimmten Fluiden eine definierte Umgebungsbedingung, ähnlich einem Reinraum, aufgebaut werden kann, wobei dazu die Isolatorvorrichtung, insbesondere der Manipulationsraum, von Umwelteinflüssen abgedichtet ist. Um dennoch der Bedienperson einen Eingriff in den Manipulationsraum zu ermöglichen, sind Arbeitshandschuhe, insbesondere in der Form von Ärmelhandschuhen, bevorzugt an einer Isolatorwand des Manipulationsraums, insbesondere der Eingriffsöffnung, festgelegt. Vorzugsweise ist die Eingriffsöffnung elliptisch ausgebildet, in der die Arbeitshandschuhe abdichtend einsetzbar sind.

Als Arbeitsbereich wird vorzugsweise ein Raumabschnitt des Manipulationsraums angrenzend an die Arbeitshandschuhe verstanden, in dem eine Bedienperson eine mögliche Arbeitsbewegung ausführen kann. In diesem Zusammenhang wird der Erfassungsbereich vorzugsweise als ein zweidimensionales oder räumliches Sichtfenster der Sensormittel um den Arbeitsbereich verstanden, wobei dieses Sichtfenster vorzugsweise softwaretechnisch begrenzt ist und eine Art Bewegungszone ausbildet, in der Arbeitsbewegungen erfasst werden können. In dem Erfassungsbereich ist bevorzugt zumindest ein Durchmesser der Eingriffsöffnung und damit auch ein Arbeitshandschuh in dessen vollem Durchmesser oder Breite erfassbar. Dadurch kann vorzugsweise ein Auswechseln, insbesondere ein Einsetzen oder Herausnehmen des zumindest einen Arbeitshandschuhs, und/oder eine Bedienung des Arbeitshandschuhs, insbesondere eine Handhabung für einen Produktionsprozess, erfasst werden.

Alternativ kann der Erfassungsbereich auch nur einen Teilbereich des zumindest einen Arbeitshandschuhs umfassen, insbesondere einen Handbereich des zumindest einen Arbeitshandschuhs, um vorzugsweise eine Bedienung des Arbeitshandschuhs zu erfassen.

Dabei hat die Erfindung überraschenderweise erkannt, dass durch eine von der Eingriffsöffnung beabstandeten Anordnung der Sensormittel in dem Manipulationsraum der zumindest eine Arbeitshandschuh unabhängig von dessen Ausgestaltung oder Festlegung, insbesondere mittels einer Eingriffsvorrichtung, detektiert werden kann. Insbesondere kann ein Auswechseln des Arbeitshandschuhs registriert werden und/oder ein Eingriff in den Manipulationsraum durch die Bedienperson detektiert werden. Dabei sind vorteilhafterweise keine Markierungen oder Sendermittel-Hardware an dem Arbeitshandschuh, insbesondere Spezialhandschuhe, selbst erforderlich. Die erfindungsgemäßen Sensormittel erlauben vielmehr eine kontaktlose und beabstandete Überwachung eines Eingriffs in den Manipulationsraum. Beispielhaft kann eine Handschuhgröße oder Form erfasst und registriert, vorzugsweise abgespeichert, werden. Weiter können aus Eingriffserfassungs-Daten Historiendaten der Isolatorrvorrichtung erstellt werden.

Besonders vorteilhaft können die Sensormittel und die Erfassungseinheit mit einer Anlagensteuerung zusammenwirken, um insbesondere eine sichere Bedienung der Isolatorrvorrichtung zu ermöglichen. So kann vorzugsweise ein Dekontaminations- oder Reinigungsprozesses nurmehr durchgeführt werden, sobald ein Arbeitshandschuh eingesetzt ist und/oder keine Bedienung des Arbeitshandschuhs detektiert wird.

Vorzugsweise handelt es sich bei den Sensormitteln um bildgebende Sensormittel, wobei es sich um optische Sensormittel, insbesondere optische Kameras, oder bildgebende Sensormittel, die insbesondere auf Licht-, Laser-, Ultraschall- oder Radarstrahlung aufbauen, handeln kann. Dabei unterscheiden sich die bildgebenden Sensormittel bevorzugt von einfachen Lichtschranken derart, dass zumindest eine zweidimensionale Erfassung eines Objekts, insbesondere des zumindest einen Arbeitshandschuhs, im Bereich der Eingriffsöffnung möglich ist.

Weiter bevorzugt weist die Erfassungseinheit Filtermittel, bevorzugt analoge und/oder digitale Filtermittel, insbesondere computer- oder softwarebasiert, auf, die dazu ausgebildet sind den Erfassungsbereich zu begrenzen und/oder einen Schwellwert zur Bewegungsdetektion einzustellen. Vorzugsweise kann mit den Filtermitteln, vorzugsweise als Art softwarebasierte Begrenzungsmittel, der Erfassungsbereich als ein räumliches Sichtfenster der Sensormittel aus erfassten Sensor-Daten softwaretechnisch begrenzt werden, um eine Art Bewegungszone oder einen Bereich von Interesse auszubilden, in der bevorzugt Bedienbewegungen erfassbar sind. Dadurch können bewegte Objekte außerhalb des Bereichs von Interesse ausgeblendet und durch softwaretechnische Filterung von der Detektion ausgeschlossen werden. Weiter können mit den Filtermitteln insbesondere passiv bewegte Hintergrundobjekte, insbesondere in der Isolatorvorrichtung aufgehängte Objekte mit periodischer Bewegung, außerhalb des Erfassungsbereichs herausgefiltert werden.

Als Schwellwert zur Bewegungsdetektion kann vorzugsweise eine Mindestbewegungsgeschwindigkeit und/oder eine Mindestbewegungsauslenkung und/oder eine Abweichung von einem Bewegungsmuster verstanden werden. Insbesondere nicht betätigte Arbeitshandschuhe und/oder Hintergrundobjekte im Erfassungsbereich können auch durch Schwingungen und/oder Fluidströmungen innerhalb der Isolatorrvorichtung in eine passive Bewegung, insbesondere in eine periodische Bewegung, versetzt werden. Eine solche Hintergrund-Bewegung oder Schwingung kann als ein Bewegungsmuster mit einem bestimmten passiven Frequenzspektrum oder Wiederholrate verstanden werden, wobei eine aktive Bedienung des Arbeitshandschuhs zu einer Abweichung von dem passiven Frequenzspektrum führt und eine Detektion auslösen kann. Zusätzlich oder alternativ kann eine Bedienung des Arbeitshandschuhs auch detektiert werden, sobald eine Mindestbewegungsgeschwindigkeit und/oder Mindestbewegungsauslenkung überschritten wird.

Vorzugsweise können dabei die Filtermittel vorkalibriert werden, insbesondere durch Berücksichtigung von Kalibrationsmessungen in einem Manipulationsraum ohne Arbeitshandschuhe und/oder Arbeitshandschuhe in einem nicht eingegriffenen Zustand. Vorzugsweise kann so eine Geometrie des Manipulationsraums erfasst und die Detektion des Arbeitshandschuhs verbessert werden. Bevorzugt sind die Sensor-Daten in einem Frequenzbereich, insbesondere mittels einer Fourier-Transformation durch die Filtermittel, auswertbar. Insbesondere in dem Frequenzbereich kann eine Art passive Hintergrundschwingung eines eingesetzten Arbeitshandschuhs, der nicht durch eine Bedienperson gegriffen wird, ausgefiltert werden.

Besonders bevorzugt ist der zumindest eine Arbeitshandschuh als ein Ärmelhandschuh ausgebildet und der Erfassungsbereich der Sensormittel zumindest auf einen Ärmelabschnitt des Ärmelhandschuhs ausgerichtet. Dadurch lässt sich bevorzugt nicht nur ein Auswechseln, insbesondere ein Einsetzen, des Arbeitshandschuhs detektieren, sondern auch eine Bedienung, insbesondere eine relativ zu einer Befestigungsposition der Sensormittel auslenkende Bewegung des Arbeitshandschuhs.

In einer bevorzugten Ausführungsform sind die Sensormittel als zumindest ein Radarsensor ausgebildet, wobei mittels der Erfassungseinheit insbesondere zeitlich veränderliche Bewegungssensordaten auswertbar sind, um den zumindest einen Arbeitshandschuh zu detektieren. Insbesondere durch eine Puls-Echo Messung kann durch Auswertung rückstrahlender elektro-magnetischer Radarwellen eine Außenkontur des Arbeitshandschuhs, insbesondere im Bereich der Eingriffsöffnung, erfasst werden; wobei, der zumindest eine Arbeitshandschuh in einem erkennbar unterschiedlichem Maße zu dem umgebenden Manipulationsraum Radarwellen reflektiert, die durch Signalauswertung, insbesondere mit den Filtermitteln, zur stationären Detektion mittels der Erfassungseinheit erfassbar sind.

Zusätzlich kann, insbesondere durch Messung einer Doppler-Frequenzverschiebung eines rückstrahlenden Radarsignals, eine Bewegungsgeschwindigkeit des zumindest einen Arbeitshandschuhs relativ zu der Befestigungsposition des zumindest einen Radarsensors bestimmt werden. Der zumindest eine Radarsensor kann in Verbindung mit der Erfassungseinheit also gleichzeitig zur Objekterkennung, sowie zur Erfassung von Bewegungen ausgebildet sein, insbesondere einer Bewegungsgeschwindigkeit und -richtung. Vorzugsweise ist die Erfassungseinheit derart ausgestaltet, dass insbesondere periodische Bewegungen, insbesondere auf Grund einer Luftströmung innerhalb des Manipulationsraums, insbesondere mit den Filtermitteln, gefiltert werden, um zuverlässig eine Bedienbewegung oder ein Auswechseln des zumindest einen Arbeitshandschuhs zu erfassen.

Vorteilhafterweise können Radarsensoren in verschiedensten Umgebungsbedingungen zuverlässig eingesetzt werden und es wurde dessen Überwachungseignung insbesondere in Verbindung mit Dekontaminationsprozessen und/oder Produktions-Handhabungsschritten in dem Manipulationsraum erkannt. Im Vergleich zu optischen Sensormitteln sind die Radarsensoren vorteilhafterweise nicht von einer Beleuchtung des Manipulationsraums abhängig und sind auch funktionstüchtig, falls ein Sichtfeld der Sensormittel aufgrund von erhöhter Feuchtigkeit, Temperatur und/oder Rauchentwicklung eingeschränkt ist.

Vorzugsweise weist der zumindest eine Radarsensor zumindest eine Empfänger- und zumindest eine Sender-Antenne, bevorzugt vier Empfänger- und drei Sender-Antennen, auf, die besonders bevorzugt auf einer Platine angeordnet sind und wobei der zumindest eine Radarsensor zur Erzeugung eines Radarsignals in einem Frequenzbereich von vorzugsweise 60GHz bis 80GHz ausgebildet ist.

Insbesondere durch die Verwendung mehrerer Empfänger- und/oder Senderantennen, kann durch geeignete Frequenzmodulation eines Sendesignals auch eine dreidimensionale Erfassung des zumindest einen Arbeitshandschuhs ermöglicht werden. Vorzugsweise kann jedoch der zumindest eine Arbeitshandschuh bereits mit einem kontinuierlichen Radarsignal durch Geschwindigkeitsmessung detektiert werden.

Insbesondere der angegebene Frequenzbereich ermöglicht eine Erfassung und/oder detektierbare Auflösung des zumindest einen Arbeitshandschuhs. Der Frequenzbereich ist vorzugsweise derart ausgebildet, dass der Radarsensor mit einem Abstand zwischen 1cm bis 15m zu der Eingriffsöffnung angeordnet werden kann.

Bevorzugt ist der zumindest eine Radarsensor derart angeordnet und/oder zur Erzeugung eines Radarsignals derart ausgebildet, dass ein Abstrahlungskegel des Radarsensors mit einem Aufweitungswinkel den Erfassungsbereich zur Detektion des zumindest einen Arbeitshandschuhs abdeckt. In diesem Zusammenhang kann insbesondere vorgesehen sein, dass der Radarsensor eine Linse zur Bündelung der Radarstrahlen aufweist. Weiter bevorzugt ist der Aufweitungswinkel einstellbar, wobei der Aufweitungswinkel vorzugsweise kleiner 50° bis 80°, vorzugsweise kleiner 60°, ist.

Vorzugsweise ist der Abstrahlungskegel mit den Filtermittel, insbesondere softwaretechnisch, besonders bevorzugt mit softwaretechnischen Begrenzungsmitteln der Erfassungseinheit, auf den Erfassungsbereich einzelner Arbeitshandschuhe begrenzbar.

Ganz besonders bevorzugt ist der Abstrahlungskegel des zumindest einen Radarsensors auf zumindest zwei Arbeitshandschuhe ausgerichtet, wobei die Erfassungseinheit die Filtermittel, insbesondere softwaretechnische Begrenzungsmittel, zur Aufteilung der Detektion in zumindest einen ersten und einen zweiten Erfassungsbereich aufweist, um rückstrahlende Radarsignale einzelnen Arbeitshandschuhen zuzuordnen. Vorzugsweise handelt es sich um zumindest zwei Arbeitshandschuhe die nebeneinander für den gleichzeitigen Eingriff mit beiden Händen der Bedienperson angeordnet sind. Als Filtermittel können bevorzugt analoge und/oder digitale Filtermittel, insbesondere computer- oder softwarebasiert, verstanden werden, wobei das Radarsignal durch die Filtermittel vorzugsweise bezüglich einer räumlich zu erwartenden Aufteilung der Arbeitshandschuhe unterteilt sind. Vorteilhafterweise kann so mittels nurmehr eines Radarsensors, insbesondere mit einem Sensorelement, mehrere Arbeitshandschuhe unabhängig voneinander überwacht werden. Dabei kann also die Anzahl von Sensorelementen vorteilhafterweise reduziert werden.

In einer weiteren bevorzugten Ausführungsform ist der zumindest eine Radarsensor als zumindest zwei, bevorzugt paarweise, in einem Gehäuse angeordnete Sensorelemente ausgebildet, um mit einem Radarsensor, insbesondere an einer Befestigungsposition, mehrere Eingriffsstationen des Manipulationsraums und/oder mehrere Arbeitshandschuhe zu erfassen. Dadurch kann ein Radarsensor besonders platzsparend in dem Manipulationsraum ausgebildet sein, wobei insbesondere auch eine elektronische Versorgung des Radarsensors in der Isolatorvorrichtung einfach ausgestaltet werden kann.

In diesem Zusammenhang ist bevorzugt, dass in dem Gehäuse ein erstes Sensorelement und ein zweites Sensorelement angeordnet ist, wobei das Gehäuse bevorzugt zwischen zumindest zwei Eingriffsstationen und/oder zumindest zwei Arbeitshandschuhen in dem Manipulationsraum angeordnet ist.

Vorzugsweise zur Überwachung von zwei Eingriffsstationen und/oder zwei Arbeitshandschuhen überlappen sich die Abstrahlungskegel der zwei Sensorelemente nicht in den Erfassungsbereichen der einzelnen Eingriffsstationen. Bevorzugt kann so eine Auswertung der erfassten Sensordaten vereinfacht und entsprechend bekannter einzelner Sensorelemente erfolgen. Alternativ oder zusätzlich können die Abstrahlungskegel zur Vermeidung einer Überlappung auch mit den Filtermitteln softwaretechnisch begrenzt werden und/oder die rückstrahlenden Radarsignale softwaretechnisch entsprechend den zu erfassenden Erfassungsbereich mit den Filtermitteln gefiltert werden.

Alternativ oder zusätzlich kann eine Überlappung der Abstrahlungskegel der zwei Sensorelemente gewünscht sein, um zusätzlich eine mittlere dritte Eingriffsstation und/oder einen mittleren dritten Arbeitshandschuh zu erfassen. Vorzugsweise können in dieser Ausführungsform drei Eingriffsstationen und/oder drei Arbeitshandschuhe mit zwei Sensorelementen in einem Gehäuse erfasst werden.

Weiter ist es denkbar, dass durch eine Überlappung der Abstrahlungskegel der zwei Sensorelemente eine Auflösung des zu detektierenden Objekts verbessert werden kann, insbesondere da die Abstrahlungskegel aus unterschiedlichen Einfallwinkeln das zu detektierende Objekt erfassen und eine potentielle Schattenbildung verringern.

Vorzugsweise ist der zumindest eine Radarsensor in dem Gehäuse gegen Umwelteinflüsse abgedichtet, insbesondere ein zweiteiliges Edelstahlgehäuse, wobei das Gehäuse vorzugsweise ein Radarstrahlen durchlässiges Abdeckelement, insbesondere ein Schutzglas, aufweist, um einen Erfassungsabschnitt des zumindest einen Radarsensors abzudecken. Das Abdeckelement ist dabei transparent für die ausgegebene und empfangene Radarstrahlung und schützt den Radarsensor gleichzeitig vor den Umwelteinflüssen während eines Dekontaminationsprozesses. Bei der Verwendung von mehreren Sensorelementen können auch jeweils mehrere Abdeckelemente verwendet werden. Insbesondere der kombinierte Einsatz eines gegen Umwelteinflüsse widerstandsfähigen Metallgehäuses mit einem für Radarstrahlen durchlässigen Schutzglases, kann vorteilhafterweise die Lebensdauer des Radarsensors in einer Dekontaminationsumgebung bei gleichzeitiger Gewährleistung der Detektionsfunktion erhöht werden. Weiter bevorzugt ist das Abdeckelement möglichst auf die Dimension des Radarsensors abgestimmt und derart dimensioniert, dass die Radarstrahlen nicht durch das Gehäuse selbst gestört werden. Das Gehäuse ist bevorzugt zweiteilig ausgebildet und weist vorzugsweise einen O-Ring zur Abdichtung zweier Gehäuseteile auf.

Weiter bevorzugt ist vorgesehen, dass die Erfassungseinheit mit einer Anlagensteuerung verbunden ist, um bei einer Eingriffsdetektion des zumindest einen Arbeitshandschuhs in einen Sperrbereich des Manipulationsraums einen Manipulationsprozess zu stoppen und/oder ein Warnsignal auszugeben, und/oder um Umgebungsbetriebsparameter für eine manuelle Manipulation einzustellen, wobei vorzugsweise die Erfassungseinheit zur Protokollierung der Eingriffsdetektion eine Speichereinheit aufweist.

Unter dem Sperrbereich kann bevorzugt ein Handhabungsbereich und/oder ein Abfüllbereich verstanden werden, falls darin automatisierte Prozesse, insbesondere Abfüllprozesse, mit bewegten Maschinen ausgeführt werden und/oder Gefahrgut gelagert wird und/oder Dekontaminationsprozesse ausgeführt werden. Ein Eingriff in einen solchen Sperrbereich sollte also zur Vermeidung von Verletzungen der Bedienperson überwacht werden. Vorteilhafterweise können bildgebende Sensormittel nicht nur als eine Art Lichtschranke einen Eingriff in den Sperrbereich detektieren, sondern auch eine sichere Bewegung innerhalb des Sperrbereich durch eine verfeinerte Detektion gewährleisten.

Insbesondere für Dekontaminationsprozesse kann der gesamte Manipulationsraum einen Sperrbereich darstellen, wobei dann eine Detektion einer Bedienbewegung des Arbeitshandschuhs unmittelbar ein Warnsignal und/oder eine Unterbrechung des Dekontaminationsprozesses durch die Anlagensteuerung auslöst.

Vorzugsweise kann ein Erfassungsbereich der Sensormittel auch auf einen Handbereich des zumindest einen Arbeitshandschuhs ausgerichtet, insbesondere für örtlich begrenzte Sperrbereich, da die Bedienperson üblicherweise zuerst mit dem Handbereich in den Sperrbereich eingreift.

Die Erfassungseinheit umfasst vorzugsweise zumindest ein Gateway zur Verbindung mit zumindest einem Sensorelement der Sensormittel, insbesondere des Radarsensors, und eine speicherprogrammierbare Sensorsteuerung, wobei mehrere Gateways mittels eines Schaltelements mit der Sensorsteuerung verbunden sind. Bei der Verwendung mehrerer Sensorelemente, insbesondere in einem gemeinsamen Gehäuse, können diese zur Datenübertragung jeweils an einem Gateway angeschlossen werden. Die einzelnen Gateways können dann jeweils an ein Schaltelement angeschlossen werden, um gemeinsam Sensordaten auf die Sensorsteuerung zu übertragen.

Die Erfindung betrifft weiterhin ein Verfahren zur Überwachung einer Isolatorvorrichtung, insbesondere einer zuvor beschriebenen Isolatorvorrichtung, aufweisend einen Manipulationsraum mit Sensormitteln, wobei eine Bedienperson mit zumindest einem Arbeitshandschuh, insbesondere ein Ärmelhandschuh, zumindest durch eine Eingriffsöffnung in den Manipulationsraum eingreift und/oder den zumindest einen Arbeitshandschuh in die Eingriffsöffnung zur Abdichtung des Manipulationsraums einsetzt, wobei die Sensormittel beabstandet zu der Eingriffsöffnung im Manipulationsraum angeordnet und mit einer Erfassungseinheit verbunden sind.

Die folgenden Verfahrensschritte werden in einer bevorzugten Reihenfolge zur Überwachung der Isolatorvorrichtung aufgelistet, wobei von dieser Reihenfolge in beliebiger Weise abgewichen werden kann.

In einem ersten Schritt wird ein Erfassungsbereich der Sensormittel, insbesondere von bildgebenden Sensormitteln, wenigstens auf einen Arbeitsbereich des zumindest einen Arbeitshandschuhs im Bereich der Eingriffsöffnung, insbesondere einen Querschnitt mit Durchmesser der Eingriffsöffnung, vorzugsweise einem maximalen Durchmesser einer elliptischen Eingriffsöffnung, ausgerichtet. In einem zweiten Schritt werden rückstrahlende Sensorsignale erfasst und mittels der Erfassungseinheit ausgewertet. Anschließend befindet sich die Isolatorvorrichtung in einem Art Überwachungszustand. Sobald in einem nächsten Schritt der zumindest eine Arbeitshandschuh eingesetzt, ausgewechselt oder bewegt wird, kann diese Bewegung mittels der Sensormittel detektiert werden. In einem dritten Schritt wird also eine Einsetz- und/oder Bedienbewegung des zumindest einen Arbeitshandschuhs, insbesondere eine Geschwindigkeits- und/oder Wegänderung bezüglich einer Referenzstellung des Arbeitshandschuhs und/oder einer objektfreien Detektion des Arbeitsbereichs und/oder eine Abweichung von einem passiven Bewegungsmuster, insbesondere periodisch schwingenden Bewegungsmuster, detektiert. Bevorzugt kann ein Einsetzen oder Auswechseln des zumindest einen Arbeitshandschuhs aus einem Vergleich mit einer Referenzmessung des objektfreien Hintergrunds des Manipulationsraums erfolgen.

In einer bevorzugten Verfahrensvariante zur Überwachung der Isolatorvorrichtung sind die Sensormittel als zumindest ein Radarsensor ausgebildet und der zumindest eine Radarsensor wird in dem Manipulationsraum derart angeordnet und/oder ein Radarsignal wird derart erzeugt, insbesondere durch Auswahl einer geeigneten Wellenlänge, dass ein Abstrahlungskegel des Radarsensors, insbesondere mit zumindest einer Radarantenne und zumindest einer Senderantenne, den Erfassungsbereich abdeckt.

Besonders bevorzugt wird zur Überwachung einer Isolatorvorrichtung mit zumindest zwei Arbeitshandschuhen ein Abstrahlungskegel des zumindest einen Radarsensors zuerst auf die zumindest zwei Arbeitshandschuhe ausgerichtet und in einem bevorzugten anschließenden zweiten Schritt zur Auswertung mittels der Erfassungseinheit mit Filtermitteln, insbesondere softwaretechnische Begrenzungsmittel, in zumindest zwei Erfassungsbereiche unterteilt, um rückstreuende Radarsignale den einzelnen Arbeitshandschuhen zuzuordnen. Als Filtermittel können analoge und/oder digitale Filtermittel, insbesondere computer- oder softwarebasiert, verstanden werden, wobei das Radarsignal durch die Filtermittel vorzugsweise bezüglich einer räumlich zu erwartenden Aufteilung der Arbeitshandschuhe unterteilt sind und zur Auswertung einer Detektion des einzelnen Arbeitshandschuhs an die Erfassungseinheit weiterleitet.

In eine weiteren bevorzugten Verfahrensvariante wird zur Überwachung der Isolatorvorrichtung, bevorzugt anschließend an eine Detektion des zumindest einen Arbeitshandschuhs, ein von der Erfassungseinheit erfasstes Signal an eine Anlagensteuerung gesendet, um bei einem manuellen Eingriff des zumindest einen Arbeitshandschuhs in einen Sperrbereich, insbesondere eines automatischen Maschinenprozesses und/oder einer Gefahrgutlagerstelle und/oder eines Dekontaminationsprozesses, ein Warnsignal an die Bedienperson ausgegeben und/oder ein weiterer, insbesondere automatischer, Betrieb der Isolatorvorrichtung zu stoppen oder einzuschränken. Vorzugsweise kann durch die Einschränkung eines automatischen Betriebs eine Kollision mit einer Hand oder eine Verletzung der Bedienperson vermieden werden.

Zusätzlich oder alternativ wäre es denkbar, dass durch die Detektion des zumindest einen Arbeitshandschuhs und der Kopplung der Erfassungseinheit mit der Anlagensteuerung auch Umgebungsbetriebsparameter in dem Manipulationsraum eingestellt werden, insbesondere eine Beleuchtungseinstellung und/oder Fluidstörmung, in Abhängigkeit des Eingriffs. Besonders bevorzugt wird in einem weiteren Verfahrensschritt das durch die Erfassungseinheit detektierte Sensorsignal zur Protokollierung der Eingriffsdetektion auf der Speichereinheit abgespeichert.

Insbesondere um die bisher beschriebenen Verfahrensschritte durchzuführen, wird ein Computerprogramm mit Programmcode-Mitteln verwendet, das auf einem computerlesbaren Datenträger gespeichert ist, und die Verfahrensschritte ausführt, wenn das Computerprogrammprodukt auf einem Computer oder auf einer entsprechenden Rechnereinheit, insbesondere einer Anlagensteuerung und/oder einer Erfassungseinheit, ausgeführt wird.

Weitere Vorteile und Einzelheiten der Erfindung ergeben sich aus der nachfolgenden Beschreibung bevorzugter Ausführungsformen der Erfindung, sowie anhand lediglich schematischen Zeichnungen.

Es zeigen:
- Fig. 1:: eine perspektivische Ansicht auf eine Isolatorvorrichtung mit Manipulationsraum, Arbeitshandschuhen und Radarsensor,
- Fig. 2:: eine Draufsicht auf die Isolatorvorrichtung gemäß der Fig. 1 mit einem Erfassungsbereich des Radarsensors,
- Fig. 3:: eine Ansicht der Isolatorvorrichtung gemäß der Fig. 2 mit Abstrahlungskegel des Radarsensors,
- Fig. 4a, Fig. 4b:: eine Detailansicht auf den Radarsensor gemäß der Fig. 1,
- Fig. 5a, 5b:: Detailansichten auf ein Sensorelement des Radarsensors gemäß der Fig. 4a und der Fig. 4b,
- Fig. 6a bis Fig. 6e:: Ansichten auf das Gehäuse des Radarsensors gemäß der Fig. 4a und der Fig. 4b,
- Fig. 7:: Schaltplan einer Erfassungseinheit des Radarsensors gemäß der Fig. 1.

Gleiche Elemente beziehungsweise Elemente mit gleicher Funktion sind in den Figuren mit den gleichen Bezugsziffern versehen.

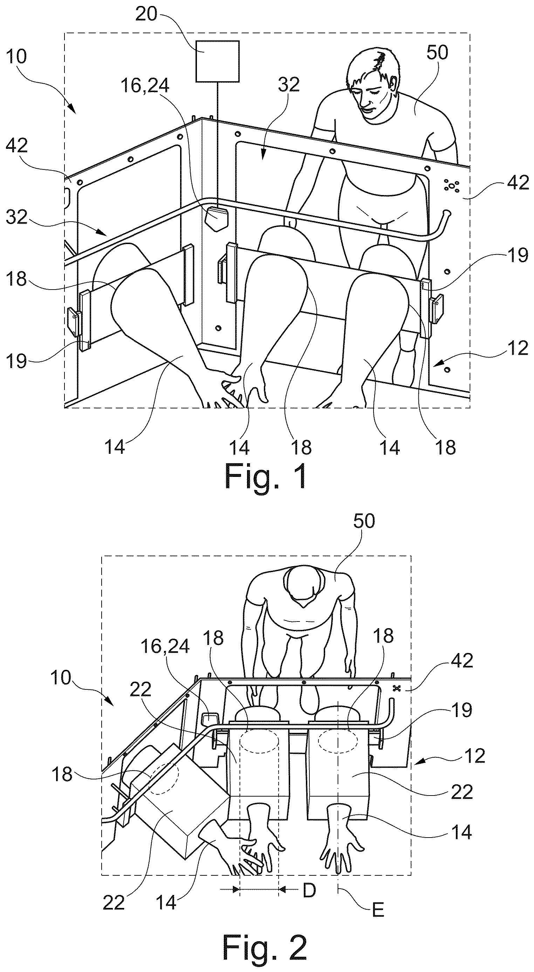

In der Fig. 1 ist eine Isolatorvorrichtung 10, insbesondere für pharmazeutische und/oder biotechnische Anwendung, mit einer schematischen Ansicht auf einen Innenbereich eines Manipulationsraums 12 dargestellt. Bei dem Manipulationsraum 12 handelt es sich insbesondere um einen Raum für Dekontaminationsprozesse, der von der Umgebung abgedichtet abgetrennt ist und eine definierte Fluidströmung beinhaltet und/oder einen Zugang für einen Abfüll- und/oder einen Handhabungsraum ausbildet. Um einer Bedienperson 50 einen manuellen Eingriff zu ermöglichen, sind Arbeitshandschuhe 14 jeweils an einer Eingriffsöffnung 18 des Manipulationsraums 12, insbesondere an seitlichen Isolatorwänden 42, angeordnet. Dabei sind die Arbeitshandschuhe 14 vorzugsweise auswechselbar und dichten die Isolatorvorrichtung 10 im eingesetzten Zustand ab. Beispielhaft sind zwei Eingriffsstationen 32 für die Bedienperson 50 dargestellt, wobei ein Eingriff entweder mittels einem einzelnen Arbeitshandschuh 14 und/oder zweier paarweise nebeneinander angeordneter Arbeitshandschuhe 14 erfolgen kann.

Vorzugsweise sind die hier dargestellten Arbeitshandschuhe 14 für eine möglichst weitreichende Bewegungsfreiheit und einen großen Arbeitsbereich als Ärmelhandschuhe ausgebildet. Weiter kann bevorzugt sein, dass die Arbeitshandschuhe 14 mittels einer Einsetzvorrichtung 19 insbesondere einzeln oder paarweise einsetzbar sind, welche die Eingriffsöffnung 18 für den jeweiligen Arbeitshandschuh 14 beinhaltet.

Zur Registrierung und/oder zur Detektion eines Auswechselns eines Arbeitshandschuhs 14, insbesondere ein Einsetzen oder Herausnehmen der Einsetzvorrichtung 19, sowie zur Detektion eines Eingriffs einer Bedienperson 50 in den Manipulationsraum 12, sind Sensormittel 16 beabstandet zu der Eingriffsöffnung 18 angeordnet, bevorzugt zwischen den zwei Eingriffsstationen 32 an einer Isolatorwand 42 befestigt und mit einer Erfassungseinheit 20 verbunden. Vorzugsweise handelt es sich bei den Sensormittel 16 um bildgebende Sensormittel, die aus einer Entfernung und insbesondere kontaktlos den Arbeitshandschuh 14 wenigstens teilweise erfassen.

In der Fig. 2 ist ein Erfassungsbereich 22 der Sensormittel 16 für die gezeigten Arbeitshandschuhe 14 schematisch und boxartig dargestellt, wobei dieser Erfassungsbereich 22 wenigstens einen Arbeitsbereich der dargestellten Arbeitshandschuhe 14 im Bereich der Eingriffsöffnung 18 umfasst. Vorzugsweise umfasst der Erfassungsbereich 22 zumindest einen Querschnitt mit Durchmesser D der Eingriffsöffnung 18, insbesondere einen maximalen Durchmesser einer elliptischen Eingriffsöffnung, um wenigstens ein Auswechseln und/oder einen Eingriff innerhalb der Eingriffsöffnung 18 detektieren zu können. Als Arbeitsbereich wird ein Raumabschnitt angrenzend an die Arbeitshandschuhe 14 verstanden, in dem die Bedienperson 50 eine mögliche Arbeitsbewegung ausführen kann. Für die vorliegend als Ärmelhandschuhe ausgebildeten Arbeitshandschuhe 14 umfasst der Erfassungsbereich 22 bevorzugt auch einen Ärmelabschnitt und ist entlang einer Erstreckungsachse E des Arbeitshandschuhs 14 ausgerichtet, wobei diese Erstreckungsachse E bevorzugt senkrecht zu einer Ebene der Eingriffsöffnung 18 steht und durch einen Mittelpunkt der Eingriffsöffnung 18 verläuft. Vorzugsweise wird der Erfassungsbereich 22 mit Filtermitteln der Erfassungseinheit softwaretechnisch begrenzt, insbesondere mit softwaretechnischen Begrenzungsmitteln, und bildet ein räumliches Sichtfenster der Sensormittel 16 als eine Art Bewegungszone oder einen räumlichen Bereich von Interesse aus, in der Bedienbewegungen des Arbeitshandschuhs 14 detektierbar sind. Dadurch können bewegte Objekte außerhalb des Bereichs von Interesse ausgeblendet und durch softwaretechnische Filterung von der Detektion ausgeschlossen werden. Weiter können mit den Filtermitteln auch bewegte Hintergrundobjekte, insbesondere in der Isolatorvorrichtung und hier nicht dargestellte aufgehängte Objekte mit periodischer Bewegung, außerhalb, insbesondere auch innerhalb, des Erfassungsbereichs herausgefiltert werden.

Als Sensormittel 16 können bildgebende Sensormittel, insbesondere auf der Grundlage optischer Erfassung mittels Kameras oder der Messung von Laser-, Ultraschall- oder Radarstrahlung basieren. Insbesondere eine optische Erfassung kann jedoch durch Dekontaminationsprozesse innerhalb der Isolatorvorrichtung 10 stark beeinflusst werden, z.B. durch wechselnde Umgebungsbedingungen, in Feuchtigkeit, Temperatur und Beleuchtung, weshalb eine zuverlässige Überwachung mit optischen Methoden problematisch sein kann. In einer bevorzugten Ausführungsform der vorliegenden Erfindung sind die Sensormittel 16 deshalb als Radarsensoren 24 ausgebildet, die im Wesentlichen unabhängig von den Umgebungsbedingungen eine zuverlässige Überwachung ermöglichen.

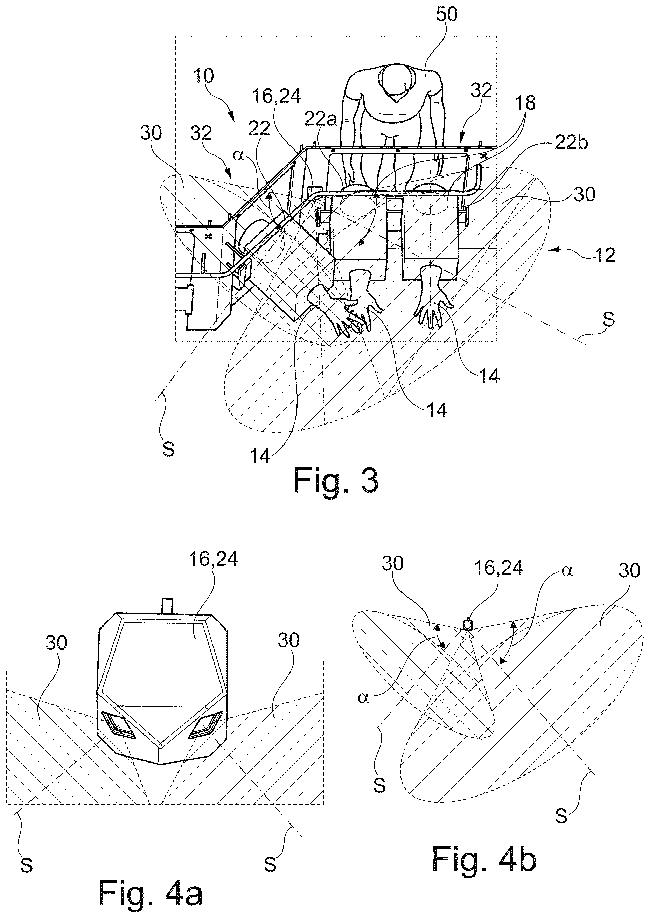

In der Fig. 3, Fig. 4a und Fig. 4b sind die Sensormittel 16 als Radarsensoren 24 im Detail mit einem Abstrahlungskegel 30 zur Visualisierung ausgesendeter Radarsignale oder Radarwellen dargestellt. Der Radarsensor 24 ist derart angeordnet und/oder zur Erzeugung eines Radarsignals derart ausgebildet, dass der Abstrahlungskegel 30 mit einem Aufweitungswinkel α den boxartig dargestellten Erfassungsbereich 22, wenigstens im Bereich der Eingriffsöffnung 18, zur Detektion des zumindest einen Arbeitshandschuhs 14 abdeckt. Der Abstrahlungskegel 30 ist hier um eine Strahlungsachse S mit einem Aufweitungswinkel α ausgebildet, vorzugsweise von weniger als 50° bis 80°, besonders bevorzugt weniger als 60°.

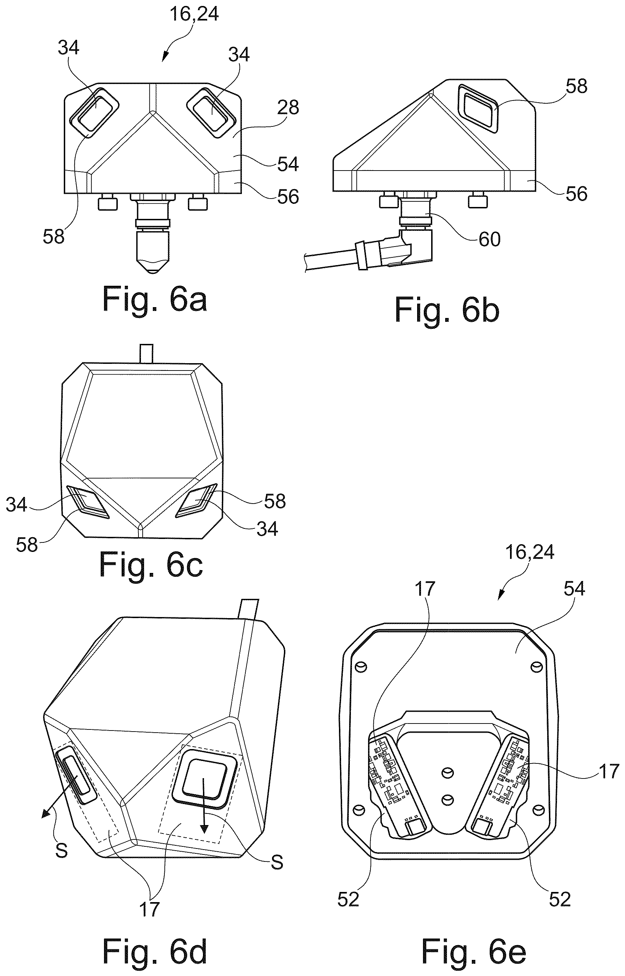

Der in der Fig. 4a und den Fig. 6a bis Fig. 6e dargestellte Radarsensor 24 ist vorzugsweise als paarweise in einem Gehäuse 28 angeordnete Sensorelemente 17 ausgebildet, um insbesondere die zwei Eingriffsstationen 32 des Manipulationsraums 12 und die Arbeitshandschuhe 14 mittels eines Radarsensors 24 zu erfassen.

Die zwei Abstrahlungskegel 30 der zwei Sensorelemente 17 sind vorzugsweise derart ausgebildet und/oder ausgerichtet, dass eine mögliche Überlappung von Radarsignalen nicht innerhalb der Erfassungsbereiche 22 der zwei Eingriffsstationen 32 und/oder der Arbeitshandschuhe 14 erfolgt, um so eine Auswertung rückstrahlender Radarsignal zu vereinfachen.

Alternativ oder zusätzlich können die zwei Abstrahlungskegel 30 zur Vermeidung einer Überlappung auch softwaretechnisch mit den Filtermitteln begrenzt werden und/oder die rückstrahlenden Radarsignale softwaretechnisch entsprechend den zu erfassenden Erfassungsbereich 22 gefiltert oder begrenzt werden.

Alternativ wäre es denkbar, dass die zwei Abstrahlungskegel 30 sich gerade in einem Erfassungsbereich 22 überlappen und durch Ausnutzung unterschiedlich ausgerichteter Strahlungsachsen S eine Auflösung des zu detektierenden Objekts verbessert werden kann. In diesem Zusammenhang wäre es außerdem denkbar, dass weitere nicht dargestellte Radarsensoren 24 verwendet werden, um eine möglichst vollumfängliche Detektion eines Arbeitshandschuhs 14 und/oder einer Eingriffsstation 32 zu erreichen. Dadurch kann ein Art Schattenbereich eines Radarsensors 24 ebenfalls erfasst werden.

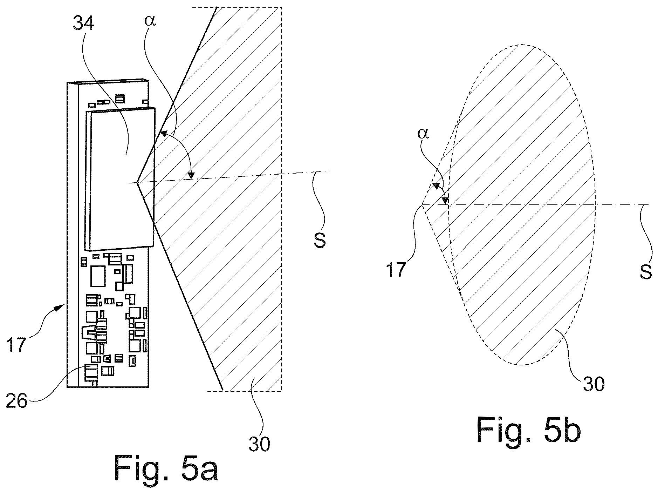

Ein Sensorelement 17 des Radarsensors 24 ist in der Fig. 5a und der Fig. 5b mit entsprechendem Abstrahlungskegel 30 entlang der Strahlungsachse S dargestellt, wobei die Strahlungsachse S senkrecht zu einem Erfassungsabschnitt 34, insbesondere einer Erfassungssensoroberfläche, ausgebildet ist. Vorzugsweise weist das Sensorelement 17 des Radarsensors 24 zumindest eine Empfänger- und zumindest eine Sender-Antenne, bevorzugt vier Empfänger- und drei Sender-Antennen, auf, die wie hier dargestellt vorzugsweise auf einer Platine 26 angeordnet sind. Ein solches Sensorelement 17 kann zur Erzeugung von Radarsignalen in einem Frequenzbereich von vorzugsweise 60GHz bis 80GHz ausgebildet sein, um Objekte, insbesondere Arbeitshandschuhe 14 in einem Abstand zu dem Radarsensor 24 zwischen 1cm und 15m detektieren zu können.

Wie in der Fig. 3 weiter gezeigt, kann der Abstrahlungskegel 30 des zumindest einen Radarsensors 24 auf zwei Arbeitshandschuhe 14 ausgerichtet sein, die insbesondere paarweise nebeneinander angeordnet und für einen zweihändigen Eingriff der Bedienperson 50 ausgebildet sind. In dieser Ausführungsform weist die Erfassungseinheit 20 vorzugsweise ein Filtermittel zur Aufteilung der Detektion in einen ersten und einen zweiten Erfassungsbereich 22a, 22b auf, um rückstrahlende Radarsignale den einzelnen Arbeitshandschuhen 14 zuzuordnen. Als Filtermittel können bevorzugt analoge und/oder digitale Filtermittel, insbesondere computer- oder softwarebasiert, verstanden werden, wobei die rückstrahlenden Radarsignale durch die Filtermittel vorzugsweise bezüglich einer räumlich zu erwartenden Aufteilung der Arbeitshandschuhe 14 unterteilt sind, insbesondere den gewünschten zwei Erfassungsbereichen 22a, 22b. Vorteilhafterweise kann so mittels nurmehr eines Radarsensors 24, insbesondere mit einem Sensorelement 17, mehrere Arbeitshandschuhe 14 unabhängig voneinander überwacht werden. Dabei kann also die Anzahl von Sensorelementen 17 vorteilhafterweise reduziert werden.

Alternativ oder zusätzlich ist es denkbar, dass zur Detektion des in der Fig. 3 dargestellten mittleren Arbeitshandschuhs 14 im ersten Erfassungsbereich 22a die Abstrahlungskegel 30 sich im ersten Erfassungsbereich 22a überlappen. Durch die Überlappung der Abstrahlungskegel 30 kann einerseits die Auflösung im ersten Erfassungsbereich 22a und eine Unterscheidung zu dem zweiten Erfassungsbereich 22b verbessert werden.

Wie in den Fig. 6a bis Fig. 6e weiter gezeigt, kann das Gehäuse 28 des Radarsensors 24 zweiteilig ausgebildet sein, wobei in einem Oberteil 54 die Sensorelemente 17 angeordnet werden können. Weiter weist das Gehäuse 28 abgeflachte und entsprechend einer gewünschten Abstrahlungsrichtung entlang der Strahlungsache S angeordnete Aufnahmeabschnitte 52 für die Sensorelemente 17 auf. Besonders bevorzugt weist der Aufnahmeabschnitt 52 einen Ausschnitt zur Einlage eines Abdeckelements 58, insbesondere eines Schutzglases, auf, das insbesondere für Radarstrahlung durchlässig ist. Das Abdeckelement 58 verdeckt und schützt den Erfassungsabschnitt 34 des Radarsensors 24, insbesondere eines Sensorelements 17. Weiter wäre es denkbar, dass das Abdeckelement 58 als Linse zur Bündelung der Radarstrahlung ausgebildet ist. Insbesondere auf Grund der Umgebungsbedingungen in einem Dekontaminationsprozess, ist zur Gewährleistung einer hohen Laufzeit des Radarsensors 24 das Gehäuse 28 aus Metall, insbesondere Edelstahl, und/oder chemisch widerstandsfähigen Kunststoff ausgebildet, wobei das Abdeckelement 58 eine Ablenkung oder Störung der Radarstrahlung verhindert. Im Unterteil 56 ist eine Kabelaufnahme 60 angeordnet, um die Sensorelemente 17 mit der Erfassungseinheit 20 zu verbinden. Zum Schutz vor Umwelteinflüssen sind die zwei Teile 54, 56 des Gehäuses mit einem hier nicht dargestellten O-Ring abgedichtet.

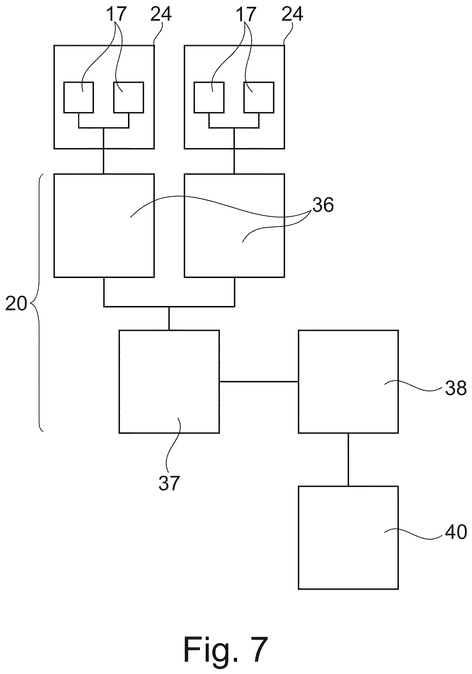

Die Fig. 7 zeigt eine beispielhafte Schaltungsanordnung, insbesondere für zwei Radarsensor 24 mit jeweils zwei Sensorelementen 17 nach der Fig. 6a bis Fig. 6e und einer Erfassungseinheit 20. Die Erfassungseinheit 20 umfasst zur Verbindung der zwei Sensorelemente 17 vorzugsweise jeweils ein Gateway 36, die wiederum mittels eines Schaltelements 37 mit einer Sensorsteuerung 38 verbunden sind. Dabei können die Sensordaten mehrere Sensorelemente 17 vorzugsweise gemeinsam auf die Sensorsteuerung 38 übertragen werden.

Weiter wäre es denkbar, dass die Erfassungseinheit 20, insbesondere die Sensorsteuerung 38, mit einer Anlagensteuerung 40 verbunden ist, um bei einer Eingriffsdetektion des zumindest einen Arbeitshandschuhs 14 in einen Sperrbereich des in der Fig. 1 dargestellten Manipulationsraums 12 einen Manipulationsprozess zu stoppen und/oder ein Warnsignal auszugeben, und/oder um Umgebungsbetriebsparameter für eine manuelle Manipulation einzustellen. Unter dem Sperrbereich kann bevorzugt ein Handhabungsbereich und/oder ein Abfüllbereich gelten, falls darin automatisierte Prozesse, insbesondere Abfüllprozesse, mit bewegten Maschinen ausgeführt werden und/oder Gefahrgut gelagert wird und/oder Dekontaminationsprozesse ausgeführt werden. In diesem Zusammenhang kann die Erfassungseinheit 20 zur Protokollierung der Eingriffsdetektion eine hier nicht dargestellte Speichereinheit aufweisen.

### Bezugszeichenliste

- 10: Isolatorvorrichtung
- 12: Manipulationsraum
- 14: Arbeitshandschuh
- 16: Sensormittel
- 17: Sensorelement
- 18: Eingriffsöffnung
- 19: Einsetzvorrichtung
- 20: Erfassungseinheit
- 22: Erfassungsbereich
- 22a, 22b: erster und zweiter Erfassungsbereich
- 24: Radarsensor
- 26: Platine
- 28: Gehäuse des Radarsensors
- 30: Abstrahlungskegel
- 32: Eingriffsstation
- 34: Erfassungsabschnitt des Sensorelements
- 36: Gateway
- 37: Schaltelement
- 38: Sensorsteuerung
- 40: Anlagensteuerung
- 42: Isolatorwände
- 50: Bedienperson
- 52: Aufnahmeabschnitt des Gehäuses
- 54: Oberteil des Gehäuses
- 56: Unterteil des Gehäuses
- 58: Abdeckelement des Gehäuses
- 60: Kabelaufnahme des Unterteils
- D: Durchmesser der Eingriffsöffnung
- E: Erstreckungsachse des Arbeitshandschuhs
- S: Strahlungsachse des Sensorelements

## Patentansprüche

1. Isolatorvorrichtung (10), insbesondere für pharmazeutische und/oder biotechnische Anwendungen, aufweisend einen Manipulationsraum (12), zumindest einen in den Manipulationsraum (12) einsetzbaren Arbeitshandschuh (14) und Sensormittel (16) zur Erfassung eines eingesetzten Zustandes des zumindest einen Arbeitshandschuhs (14), wobei der zumindest eine Arbeitshandschuh (14) in einer Eingriffsöffnung (18) des Manipulationsraums (12) auswechselbar einsetzbar ist und im eingesetzten Zustand die Isolatorvorrichtung (10) abdichtet,
**dadurch gekennzeichnet,**
**dass** die Sensormittel (16) beabstandet zu der Eingriffsöffnung (18) in dem Manipulationsraum (12) angeordnet und mit einer Erfassungseinheit (20) verbunden sind, wobei ein Erfassungsbereich (22) der Sensormittel (16) wenigstens einen Arbeitsbereich des zumindest einen Arbeitshandschuhs (14) im Bereich der Eingriffsöffnung (18), insbesondere einen Querschnitt mit Durchmesser (D) der Eingriffsöffnung (18), umfasst, um zumindest ein Auswechseln und/oder eine Bedienung des zumindest einen Arbeitshandschuhs (14) in dem Manipulationsraum (12) zu detektieren und mittels der Erfassungseinheit (20) auszuwerten.

2. Isolatorvorrichtung nach dem Anspruch 1,
**dadurch gekennzeichnet,**
**dass** die Erfassungseinheit (20) Filtermittel, insbesondere computer- oder softwarebasiert, aufweist, die dazu ausgebildet sind, den Erfassungsbereich (22) zu begrenzen und/oder einen Schwellwert zur Bewegungsdetektion einzustellen, insbesondere um passive Hintergrundbewegungen herauszufiltern.

3. Isolatorvorrichtung nach dem Anspruch 1 oder 2,
**dadurch gekennzeichnet,**
**dass** der zumindest eine Arbeitshandschuh (14) als ein Ärmelhandschuh ausgebildet ist und der Erfassungsbereich (22) der Sensormittel (16) zumindest auf einen Ärmelabschnitt des Ärmelhandschuhs ausgerichtet ist.

4. Isolatorvorrichtung nach einem der Ansprüche 1 bis 3,
**dadurch gekennzeichnet,**
**dass** die Sensormittel (16) als zumindest ein Radarsensor (24) ausgebildet sind, wobei mittels der Erfassungseinheit (20) insbesondere zeitlich veränderliche Bewegungssensordaten auswertbar sind, um den zumindest einen Arbeitshandschuh (14) zu detektieren.

5. Isolatorvorrichtung nach dem Anspruch 4,
**dadurch gekennzeichnet,**
**dass** der zumindest eine Radarsensor (24) zumindest eine Empfänger- und zumindest eine Sender-Antenne, bevorzugt vier Empfänger- und drei Sender-Antennen, aufweist, die vorzugsweise auf einer Platine (26) angeordnet sind, und wobei der Radarsensor (24) zur Erzeugung eines Radarsignals in einem Frequenzbereich von vorzugsweise 60GHz bis 80GHz ausgebildet ist.

6. Isolatorvorrichtung nach einem der Ansprüche 4 oder 5,
**dadurch gekennzeichnet,**
**dass** der zumindest eine Radarsensor (24) derart angeordnet und/oder zur Erzeugung eines Radarsignals derart ausgebildet ist, dass ein Abstrahlungskegel (30) des zumindest einen Radarsensors (24) mit einem Aufweitungswinkel (α) den Erfassungsbereich (22) zur Detektion des zumindest einen Arbeitshandschuhs (14) abdeckt.

7. Isolatorvorrichtung nach dem Anspruch 6,
**dadurch gekennzeichnet,**
**dass** der Abstrahlungskegel (30) des zumindest einen Radarsensors (24) auf zumindest zwei Arbeitshandschuhe (14) ausgerichtet ist, wobei die Erfassungseinheit (20) ein Filtermittel zur Aufteilung der Detektion in einen zumindest einen ersten und einen zweiten Erfassungsbereich (22a, 22b) aufweist, um rückstrahlende Radarsignale einzelnen Arbeitshandschuhen (14) zuzuordnen.

8. Isolatorvorrichtung nach einem der Ansprüche 6 oder 7,
**dadurch gekennzeichnet,**
**dass** der Radarsensor (24) als zumindest zwei, bevorzugt paarweise, in einem Gehäuse (28) angeordnete Sensorelemente (17) ausgebildet ist, um mehrere Eingriffsstationen (32) des Manipulationsraums (12) und/oder mehrere Arbeitshandschuhe (14) zu erfassen.

9. Isolatorvorrichtung nach dem Anspruch 4 bis 8,
**dadurch gekennzeichnet,**
**dass** der zumindest eine Radarsensor (24) in einem Gehäuse (28) gegen Umwelteinflüsse abgedichtet ist, insbesondere ein zweiteiliges Edelstahlgehäuse, wobei das Gehäuse vorzugsweise ein für Radarstrahlen durchlässiges Abdeckelement (58), insbesondere ein Schutzglas, aufweist, um einen Erfassungsabschnitt (34) des Radarsensors (24) abzudecken.

10. Isolatorvorrichtung nach einem der Ansprüche 1 bis 9,
**dadurch gekennzeichnet,**
**dass** die Erfassungseinheit (20) mit einer Anlagensteuerung (40) verbunden ist, um bei einer Eingriffsdetektion des zumindest einen Arbeitshandschuhs (14) in einen Sperrbereich des Manipulationsraums (12) einen Manipulationsprozess zu stoppen und/oder ein Warnsignal auszugeben, und/oder um Umgebungsbetriebsparameter für eine manuelle Manipulation einzustellen, wobei vorzugsweise die Erfassungseinheit (20) zur Protokollierung der Eingriffsdetektion eine Speichereinheit aufweist.

11. Isolatorvorrichtung nach einem der Ansprüche 1 bis 10,
**dadurch gekennzeichnet,**
**dass** die Erfassungseinheit (20) zumindest ein Gateway (36) zur Verbindung mit zumindest einem Sensorelement (17) der Sensormittel (16) und eine speicherprogrammierbare Sensorsteuerung (38) umfasst, wobei mehrere Gateways (36) mittels eines Schaltelements (37) mit der Sensorsteuerung (38) verbunden sind.

12. Verfahren zur Überwachung einer Isolatorvorrichtung (10), insbesondere nach einem der Ansprüche 1 bis 11, aufweisend einen Manipulationsraum (12) mit Sensormitteln (16), wobei eine Bedienperson (50) mit zumindest einem Arbeitshandschuh (14), insbesondere ein Ärmelhandschuh, zumindest durch eine Eingriffsöffnung (18) in den Manipulationsraum (12) eingreift oder den zumindest einen Arbeitshandschuh (14) in die Eingriffsöffnung (18) zur Abdichtung des Manipulationsraums (12) einsetzt, wobei die Sensormittel (16) beabstandet zu der Eingriffsöffnung (18) im Manipulationsraum (12) angeordnet und mit einer Erfassungseinheit (20) verbunden sind, mit den folgenden Schritten:
- Ausrichten eines Erfassungsbereichs (22) der Sensormittel (16), insbesondere von bildgebenden Sensormitteln, wenigstens auf einen Arbeitsbereich des zumindest einen Arbeitshandschuhs (14) im Bereich der Eingriffsöffnung (18),
- Erfassen von rückstrahlenden Sensorsignalen und Auswertung der Sensorsignale mittels der Erfassungseinheit (20),
- Detektion einer Einsetz- und/oder Bedienbewegung des zumindest einen Arbeitshandschuhs (14), insbesondere eine Geschwindigkeits- oder Wegänderung bezüglich einer Referenzstellung des Arbeitshandschuhs (14) und/oder einer objektfreien Detektion des Arbeitsbereichs und/oder eine Abweichung von einem passiven Bewegungsmuster, insbesondere periodisch schwingenden Bewegungsmuster.

13. Verfahren zur Überwachung einer Isolatorvorrichtung nach dem Anspruch 12, wobei die Sensormittel als zumindest ein Radarsensor ausgebildet sind und der zumindest eine Radarsensor in dem Manipulationsraum derart angeordnet wird und/oder ein Radarsignal derart erzeugt wird, insbesondere durch Auswahl einer geeigneten Wellenlänge, dass ein Abstrahlungskegel des Radarsensors, insbesondere mit zumindest einer Radarantenne und zumindest einer Senderantenne, wenigstens den Arbeitsbereich der Arbeitshandschuhe (14) im Bereich der Eingriffsöffnung (18) abdeckt.

14. Verfahren zur Überwachung einer Isolatorvorrichtung (10) nach dem Anspruch 13, wobei ein Abstrahlungskegel (30) des zumindest einen Radarsensors (24) zumindest zwei Arbeitshandschuhe (14) abdeckt und zur Auswertung mittels der Erfassungseinheit (20) mit Filtermitteln in zumindest einen ersten und einen zweiten Erfassungsbereich (22a, 22b) unterteilt wird, um rückstrahlende Radarsignale einzelnen Arbeitshandschuhen (14) zuzuordnen.

15. Verfahren zur Überwachung einer Isolatorvorrichtung (10) nach einem der Ansprüche 12 bis 14, wobei bevorzugt anschließend an eine Detektion des zumindest einen Arbeitshandschuhs (14) ein von der Erfassungseinheit (20) erfasstes Signal an eine Anlagensteuerung (40) gesendet wird, um bei einem manuellen Eingriff des zumindest einen Arbeitshandschuhs (14) in einen Sperrbereich, insbesondere eines automatischen Maschinenprozesses, ein Warnsignal an die Bedienperson (50) auszugeben und/oder einen weiteren Betrieb der Isolatorvorrichtung (10) zu stoppen oder einzuschränken.

16. Computerprogramm mit Programmcode-Mitteln, das auf einem computerlesbaren Datenträger gespeichert ist, um alle Schritte eines Verfahrens nach einem der Ansprüche 12 bis 15 durchzuführen, wenn das Computerprogrammprodukt auf einem Computer oder auf einer entsprechenden Rechnereinheit, insbesondere einer Anlagensteuerung (40) und/oder einer Erfassungseinheit (20), ausgeführt wird.
